# EUROPEAN PATENT SPECIFICATION

(11) **EP 2 291 627 B1**
(45) Date of publication and mention of the grant of the patent: **14.11.2018**
(21) Application number: 09762756.6
(22) Date of filing: 10.06.2009
(51) Int. Cl.: G01M 3/28, F02M 65/00, F23N 5/24, H01M 8/0438, G01M 3/02, F02D 41/22

(54) **METHOD AND SYSTEM FOR DIAGNOSIS OF GAS LEAKAGE IN A GAS-POWERED VEHICLE**
VERFAHREN UND SYSTEM ZUR DIAGNOSE VON GASLECKAGE IN EINEM GASBETRIEBENEN FAHRZEUG
PROCÉDÉ ET SYSTÈME PERMETTANT DE DIAGNOSTIQUER UNE FUITE DE GAZ DANS UN VÉHICULE À GAZ

(30) Priority: 12.06.2008 SE 0801374
(43) Date of publication of application: 09.03.2011
(73) Proprietor: Scania CV AB (publ), 151 87 Södertälje (SE)
(72) Inventor: MALMGREN, Björn, S-126 52 Hägersten (SE); JOHANSSON, Andreas, S-118 54 Stockholm (SE); LINDVALL, Alexander, S-155 91 Nykvarn (SE); FRITZSON, Folke, S-144 32 Rönninge (SE)
(74) Representative: Scania CV AB
(86) International application number: PCT/SE2009/050698
(87) International publication number: WO 2009/151387

(56) References cited:
- EP-A2- 0 184 836
- DE-A1- 19 831 067
- DE-A1-102006 005 863
- GB-A- 2 099 158
- JP-A- 2004 095 425
- KR-A- 20070 027 950
- US-A1- 2004 099 048
- US-A1- 2006 228 601
- US-A1- 2007 193 340
- US-B1- 7 127 937

## Description

### TECHNICAL FIELD

The present invention relates to a method and a system for automatic diagnosis of gas leakage in a gas system intended primarily for gas-powered vehicles. In particular, the invention relates to a method and a system for detection of leakage in the valves installed in the vehicle's gas system for shutting off the gas flow through the system, which valves may be of high-pressure and/or low-pressure type.

### TECHNOLOGICAL BACKGROUND

An increasing proportion of the vehicle fleet is powered by gas. Gas-powered vehicles are at present mainly intended for transport within a limited geographical area, e.g. in a city where the network of filling stations is sufficiently dense for vehicle refuelling to be possible in an acceptable manner. The most commonly used types of gas-powered vehicles are buses, distribution vehicles, refuse collection vehicles or the like. The gas may be of the CNG (compressed natural gas) type, and biogas, e.g. methane gas, falls within this fuel category.

The vehicle industry is putting a great deal of effort and resources into developing efficient vehicles, engines and systems for gas-powered operation, which affords a number of advantages. Gas is a relatively clean and therefore attractive fuel which does not smell, produces low emissions of dangerous exhaust gases and harmful substances and involves relatively low operating costs, and gas-powered vehicles often run more quietly than other vehicles. All these characteristics are advantageous, particularly in an urban environment.

Storing sufficient gas in vehicles entails using one or more tanks which store gas at high pressure. The tanks may for example be situated on the vehicle's roof or at some other suitable location in the vehicle's chassis. Gas pressures of up to 200 bar are commonly used, but higher pressures may also arise. Such high pressures impose severe requirements on the tanks and the components of the gas system, since even relatively small defects and leakage may have far-reaching consequences.

Leakage risks may be divided into two kinds, viz. external and internal leakage.

External leakage means gas leaking out to the surroundings/atmosphere or into the vehicle's engine space. CNG is a volatile gas, which means that accidental leakage of this kind usually quickly dissipates and rises. It is difficult to ignite such gas in the open, since a quite exact gas/air ratio is required for the mixture to be combustible. The risk of explosion or fire is therefore slight. For these reasons, external leakage is regarded as not particularly dangerous. Nor are vehicles usually equipped with any warning system to draw attention to this kind of leakage.

Internal leakage may occur via, for example, a valve, resulting in leaking gas entering the line system and following the same path through the system as when the engine is running. The gas may thus pass through the engine and out into the exhaust system and the catalyst or make its way upstream into the air filter. This leads to undesirable and potentially dangerous situations when the engine is started after a halt.

On a conventional gas-powered vehicle, it is normal for ignition, injection and main valves to be switched off simultaneously. This may result in quite a large amount of gas remaining in the pipelines and possibly leaking by internal leakage.

When gas cylinders are full of gas, the pressure up to the pressure regulator of the system is about 200 bar. If the low-pressure valve is not tight, a small leak may cause quite a large amount of gas to leak out into the system. Injectors are never completely tight but always leak slightly even when closed. A further shutoff valve is therefore often installed on the low-pressure side. If the low-pressure valve is not tight, it may leak a small amount of gas. Should the resulting gas/air mixture reach a combustible ratio, it may be ignited when the engine is started, which may lead to an explosive type of fire.

There are various known methods for solving this problem. One way is to run the engine, close the valves and keep an eye on the pressure drop for a certain time to see whether the valve is tight or not. However, such a method has a number of deficiencies, it detects only major leaks and cannot detect leakage at all if the valve does not close. A slight leak may be at least as dangerous, if it continues for a long time, as a major leak, since the relatively limited volume of the engine system will become full of gas. Another deficiency of this method is that diagnosing the valves involves having to start the engine, by which time the damage may already have occurred. If the vehicle is not run for a period of perhaps a few weeks and is thereafter started up in a case where it is quite a long time since the valves were diagnosed and leakage has occurred in the meantime, it will not be detected before the engine is started, in which case the damage may already have occurred.

Fuel systems of the type mentioned usually comprise at least two valves which can interrupt the gas flow between the tank and the vehicle's engine. Such systems are therefore redundant and robust. A first high-pressure valve is preferably provided at or quite near to the gas tank and a further valve of low-pressure type is usually provided near the engine. Leakage through the seals of the valves may be caused by the gas pressure to which the valves are subject, and certainly the older the valve and the seal, the greater the risk of leakage.

For these reasons, it is desirable to propose a method and a system for detection of possible gas leakage through the valves.

US7127937 describes a method for detecting leakage in a fuel cell system. The gas pressure in the line between two shutoff valves is measured with the system shut off. Before any measured value is stored, the first valve is closed. When the gas pressure has dropped to a predetermined level, the second valve is also closed and the fuel cell system stops. A value of the current pressure is stored in a memory. Before the next start, the gas pressure is measured again at the same measuring point and the new value is compared with the stored value. If the new measured value is higher than the stored value, it will indicate that the first valve is leaking, but if it is lower this will indicate that the second valve is leaking.

This technology detects defects in both of the valves but only allows major deficiencies and leakage to be detected when the pressure drop across the respective valve is lower than in the present invention. A further pressure measuring device has also be installed, increasing the cost of the system. Another disadvantage is that a relatively large amount of gas between the valves is required for the diagnosis to function in practice, i.e. the valves have to be further apart from one another on the gas line. This is a disadvantage in that it may render installation in the vehicle difficult because of shortage of space. A further disadvantage may be the difficulty of closing the second valve at exactly the right time for achieving a qualitative diagnosis, i.e. so that the correct ratio between the pressure drops across the two valves is achieved. Compensating for this requires a larger amount of gas "confined" between the valves, but this may be to the detriment of the system's safety in that the first shutoff valve will be far from the engine and a larger amount of gas may therefore leak into the engine if the second valve begins to leak.

US5592923 describes a diagnosis device and method applicable to fuel vapour in an engine. The invention is intended to diagnose defects in the device, e.g. defects in various valves which form part of the system so that discharges of fuel vapour to the atmosphere are avoided. The invention is not intended specifically for gas-powered vehicles and the gas pressure in the system is relatively low. The system is complex, comprises many components and is therefore expensive to manufacture and install.

Other examples of devices and methods for gas leakage detection, or gas monitoring, in a gas system are described by the documents US2007193340, US2006228601, GB2099158 or JP2004095425.

### OBJECTS AND MOST IMPORTANT CHARACTERISTICS OF THE INVENTION

An object of the invention is to solve said problem and propose a method and a system for automatic diagnosis of the function of valves which form part of a gas-powered vehicle, and hence to reduce the risk of, or prevent, near-accidents due to gas having leaked through the valves in the gas system.

A further object of the invention is to propose a method for diagnosing small leaks through the valves, which method entails one valve at a time being subjected to maximum pressure and being diagnosed. By this procedure it is possible to effect a larger pressure drop across the valve being diagnosed at the time, thereby making it possible to detect small leaks which might not be detected by a smaller pressure drop.

A further object of the invention is to make it easier to install a diagnosis system in a vehicle. Since a smaller amount of gas confined between the valves is required for the diagnosis to work, the valves can be physically situated much closer to one another on the gas line than would otherwise be the case. This is a substantial advantage in vehicle applications in that installation may otherwise not infrequently be difficult to carry out in practice.

A further object of the present invention is to propose a method which is easy to implement and which renders the diagnosis system less expensive and more reliable.

The aforesaid and other objects are achieved according to the invention by a method and a system according to the features indicated in claims 1 and 3.

Further features and advantages of the invention are indicated by the more detailed description of the invention set out below, the attached drawings and the other claims.

### BRIEF DESCRIPTION OF THE DRAWINGS

The invention is described below in more detail in a number of preferred embodiment examples with reference to the attached drawings.
Figure 1 depicts a schematic diagram of the components of a known gas system intended for a gas-powered vehicle.
Figure 2 depicts the basic composition of the components of a gas system according to the invention.
Figures 3a-f depict schematically how the valves open and close.
Figure 4 depicts the basic composition of the components of an alternative embodiment of a gas system according to the invention.
Figures 5a-f depict schematically how the valves in the modified gas system open and close.

### DESCRIPTION OF PREFERRED EMBODIMENTS

The invention relates to a method and a system intended to diagnose leakage in one or more components of a gas system for gas-powered vehicles. The system comprises at least two electrically controlled valves, preferably of low-pressure type, placed in series with, and at a certain distance from, one another. The system comprises at least one pressure sensor situated either between said valves or between the valves and the vehicle's engine, i.e. in the portion of the system which is subject to low gas pressure.

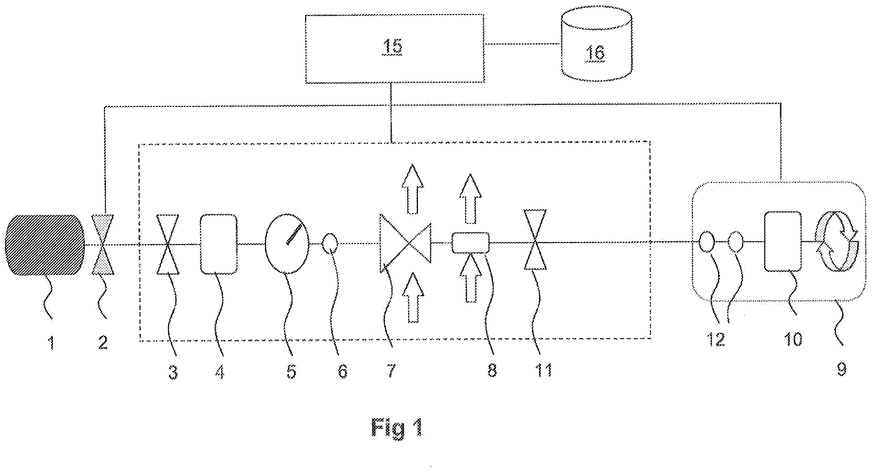

Figure 1 depicts an example of a known gas system. A number of different components are connected together by gas lines. The fuel gas is replenished and stored in one or more pressure
tanks 1 situated at suitable locations in the vehicle, e.g. in/on its roof. By government order (R110) there has to be on each tank 1 a shutoff valve 2 by which gas supply can be switched off. This high-pressure shutoff valve 2 is usually electrically controlled but it is mechanically closed automatically by a spring mechanism when the control signal is actively interrupted or drops out for other reasons. All the valves are preferably controlled from the engine control unit (not depicted), e.g. via a control relay (not depicted) or a control device intended for the purpose. Downstream of the high-pressure shutoff valve 2 there is normally a manual shutoff valve 3 by which the gas can be switched off in the event of any defect in the system, or for servicing operations or the like. Downstream of this manual valve 3 there is a filter 4 whose main function is to remove from the gas any oil residues which may for example come from filling station compressors. The compressors often leak a small amount of oil which mixes with the gas and accompanies it into the system, in which it may impair the function of sensitive components.

After the filter, there is a pressure gauge 5 for manual reading of the pressure in the tank 1 when the high-pressure valve 2 and the manual valve 3 are in their respective open positions. As previously mentioned, the pressure in the tank 1 may be up to 200 bar or more and the high pressure presents a major risk for persons in the vicinity of the system. Gas which leaks out into a confined and limited space therefore presents an obvious fire and explosion risk.

Downstream of the pressure gauge 5 there is a high-pressure sensor 6. The high-pressure sensor 6 may be of electronic type, e.g. a sensor with metal membrane and strain gauge, and may be used as the vehicle's fuel gauge. The measured value from the high-pressure sensor 6 is substantially proportional to the amount of gas present in the tank 1 and is used primarily for indicating how much fuel is still present in the vehicle's tank 1. The high-pressure sensor 6 may also be used for detecting external leakage from the system by indicating whether the pressure in the tank 1 drops when the vehicle is not in operation.

Downstream of the high-pressure sensor 6 there is a pressure regulator 7 with integrated heat exchanger 8. When the gas pressure is reduced in the pressure regulator 7, i.e. when the gas has been allowed to expand, it becomes very cold, which might lead to some components of the system freezing apart or being damaged. The purpose of the heat exchanger 8 is therefore to warm the gas, e.g. by means of the coolant of the engine 9. The pressure regulator 7 regulates the pressure down from about 200 bar in the tank to 8-10 bar, which is a usual feed pressure for the engine's injectors 10.

In addition, a low-pressure valve 11, which may for example be controlled magnetically and electrically, and a low-pressure sensor 12, which may with advantage be a combined pressure and temperature sensor, are installed between the heat exchanger 8 and the engine 9. The sensor 12 may be fitted directly on or adjacent to the engine 9 and in such cases will with advantage be situated immediately before the injectors 10. The primary purpose of this sensor 12 is to determine the feed pressure of the injectors 10 so that the right amount of fuel can be calculated by the engine control system and injected. The amount of fuel actually injected into the engine 9 depends on the feed pressure of the gas and the time for which the injectors 10 are open.

Up to the pressure regulator 7, the gas maintains a high pressure, resulting in a relatively large amount of gas being latent in the line system. This means that the engine 9 can run for a considerable time even after the high-pressure valve 2 has been switched off. As drivers might find this inconvenient, the high-pressure valve 2 and the low-pressure valve 11 are both switched off at the same time when the driver gives a switch-off order to the engine 9, thereby causing the engine 9 to stop more quickly. Modern combustion engines are otherwise usually switched off by closing the injectors and/or, where applicable, by switching off the ignition.

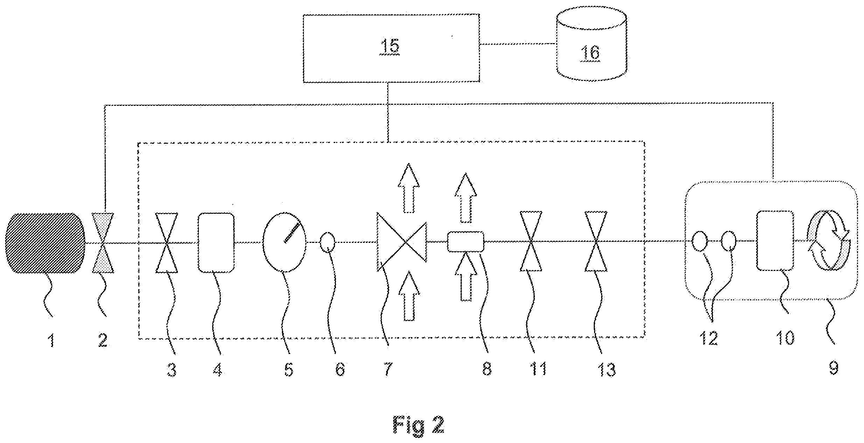

***A first method*** for identifying leakage in the valves entails incorporating a further valve, a second low-pressure valve 13, in the gas system. According to Figure 2, this second low-pressure valve 13 is placed in series with, and downstream of, the already present first low-pressure valve 11. When the driver gives an order for the engine 9 to switch off, e.g. via the gas system's control device 15, a signal is sent which leads to at least one of the low-pressure valves 11,13 being closed, thereby halting the gas supply to the engine 9.

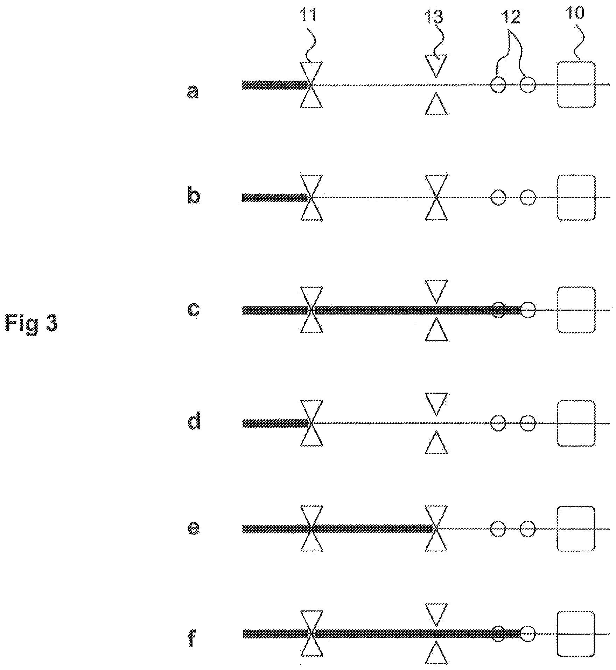

The first step in diagnosis of the valves 11,13 according to this method is the use of signals from the control device 15 to close the first low-pressure valve 11 (Figure 3a) and allow the engine 9 to consume the gas which is present in the line system in the pipelines downstream of this first low-pressure valve 11. The result is a pressure drop across this first valve 11. Thereafter, when the gas has been wholly or partly consumed in the line system, the second valve 13 is also closed (Figure 3b). This means that there is full normal operating pressure up to the first valve 11 but a lower pressure between the valves 11,13. If the engine 9 has run for long enough to consume all of the gas, the pressure will be the same between the valves 11,13 as after the second valve 13, i.e. approximately atmospheric pressure.

As an alternative to allowing it to consume the gas which is between the valves 11,13, the engine 9 may be switched off immediately and the gas be thereafter evacuated into and through the engine 9, e.g. by the injectors 10 being controlled to their open position. This intentional evacuation of the gas into the engine presents no safety risk, since a very small amount of gas is involved and it is evacuated in a controlled manner.

Before the next start, the system has to diagnose the first valve 11. The second valve 13 is therefore opened first (Figure 3c). The means used for measuring the pressure is the pressure sensor 12 situated downstream of the low-pressure valves 11,13 but before the injectors 10. If a pressure increase is detected by the sensor 12, this will indicate that the first low-pressure valve 11 has leaked in that the pressure has evidently increased between the low-pressure valves 11,13 since they were closed. If no pressure increase is detected, the first valve 11 is tight. In this measurement it is assumed that the second valve 13 is tight.

The next time the engine 9 is switched off, the low-pressure valves 11,13 are shut off in reverse order. The second valve 13 is thus closed first (Figure 3e) and the gas present in the lines after this second valve 13 is consumed by the engine 9 or is evacuated in some other way. The low-pressure valves are thus closed first alternately. Alternatively, the two low-pressure valves 11,13 are closed simultaneously. The result is a pressure drop across the second valve 13 but not across the first valve 11. Before the next start, the second low-pressure valve 13 is diagnosed and, since the first low-pressure valve 11 is now regarded as tight, no further gas should be able to come in between the low-pressure valves 11,13. If a significant pressure increase is detected when the second low-pressure valve 13 is opened (Figure 3f), this will indicate that the second valve 13 is tight. The gas before the second low-pressure valve 13 has thus remained in place. If a pressure increase is not detected or if the pressure increase is not sufficient, i.e. not exceeding a predetermined limit value, this will be an indication that gas has leaked out through the second low-pressure valve 13, which is therefore not tight.

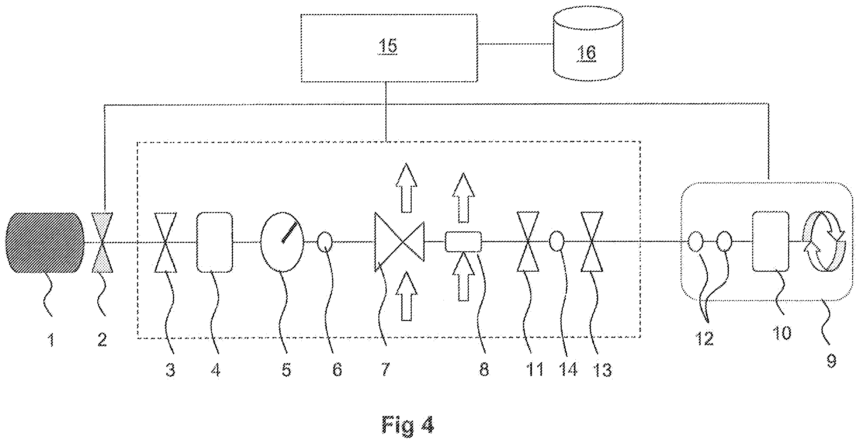

***A second way*** of identifying leakage in the low-pressure valves is depicted in Figure 4 and involves incorporating a further pressure sensor 14 in the system. This further sensor 14 is installed between the two low-pressure valves 11,13 according to the embodiment example described. The pressure sensor 14 may be a combined temperature and pressure sensor.

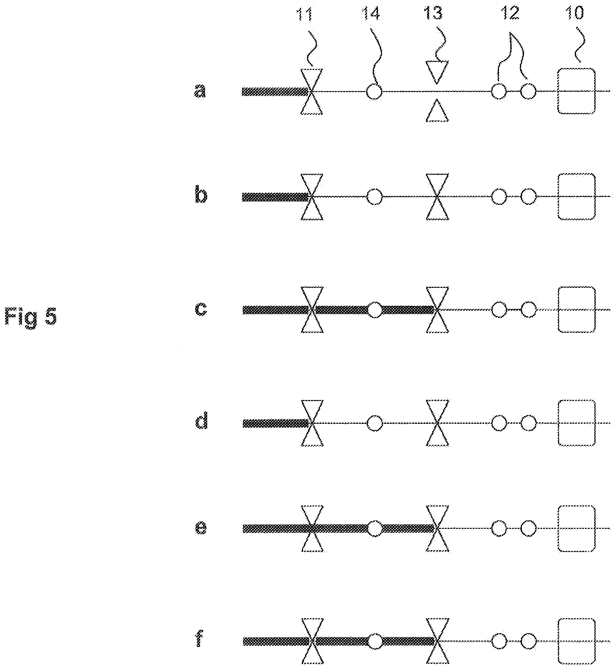

In the diagnosis of the low-pressure valves 11,13, the first low-pressure valve 11 is closed first (Figure 5a). The engine 9 is allowed to consume the gas which is present downstream of this first low-pressure valve 11, and the engine 9 thereafter stops for lack of fuel. Alternatively, as previously mentioned, the gas may also be evacuated into the engine 9 through the injectors 10, in which case the engine is switched off in some other way. A maximum possible pressure drop occurs across the first low-pressure valve 11. Thereafter the second low-pressure valve 13 is closed (Figure 5b). The pressure value and, where applicable, a temperature value, which the sensor 14 detects with the two low-pressure valves 11,13 closed, is/are saved in a memory 16. With the two low-pressure valves 11,13 closed, there is therefore a pressure drop across the first low-pressure valve 11 but not across the second low-pressure valve 13.

Immediately before the next start, the gas pressure at the pressure sensor 14 between the low-pressure valves 11,13 is compared with the pressure stored after the previous closure of the low-pressure valves 11,13. The temperature of the gas present between the low-pressure valves 11,13 may also be measured and used to compensate the pressure value for any temperature changes in the gas. A control or computing unit, e.g. a control device 15, is used for the purpose. If the gas becomes warmer when the vehicle is standing still, the gas pressure in the line will increase. The pressure value is therefore compensated for the temperature change so that it does not ultimately lead to an incorrect leakage indication.

Before the engine 9 is next started, a check is therefore done to see whether the gas pressure between the low-pressure valves 11,13 has increased since they were last closed (Figure 5c). If such is the case, it shows that the first low-pressure valve 11 has leaked. If the pressure has not increased (Figure 5d), this indicates that the first low-pressure valve 11 is tight.

With this method, all that is therefore required is that the pressure drops somewhat across the low-pressure valve diagnosed. It is important that the pressure drop can be detected. This is a substantial advantage in that there will be a smaller proportion of the gas between the low-pressure valves 11,13 which needs to be evacuated or burnt upon switching off of the engine 9. On the basis that whichever low-pressure valve 11,13 is not being diagnosed on the particular occasion is tight, even smaller leaks can be detected as compared with the state of the art. This is because more exact limit values can be applied.

At the next switch-off, the second low-pressure valve 13 is diagnosed. This entails closing the second low-pressure valve 13 first or closing the two low-pressure valves 11,13 simultaneously (Figure 5e). No pressure drop will occur across the first low-pressure valve 11, since the pressure will be the same on both sides, i.e. the pressure arrived at after the tank pressure has been reduced in the pressure regulator, typically 4-10 bar. Across the second low-pressure valve 13, however, there will be a pressure drop since the gas after this valve will have been wholly or partly consumed or evacuated. The pressure and temperature measurement values of the sensor 14 are stored in the memory 16.

Before the next start, the pressure value and, where applicable, the temperature value between the low-pressure valves 11,13 is/are compared with the values stored in the memory 16. If the pressure value is unchanged, this will indicate that the second low-pressure valve 13 has remained tight, since it has already been verified that the first low-pressure valve 11 is tight. If the pressure has dropped, this will indicate that the second low-pressure valve 13 has leaked (Figure 5f).

By this second diagnosis method, smaller leaks can be detected than by the first method. This is because a pressure increase is detected when the second low-pressure valve 13 is opened, since the pressure does not immediately disappear through the injectors 10. The injectors 10 thus maintain the pressure in the lines for a certain time. However, injectors 10 are normally of variable tightness when they are closed, which variation may be due to individual diffusion, ageing, wear, temperature, adhesions etc.

This second diagnosis method thus makes it possible to detect a faulty low-pressure valve 11,13 at an earlier stage than would otherwise be the case, and the advantages are that this system is more robust and allows more accurately defined limit levels. This also means that less gas needs to be consumed or vented away after the closure of the valves 11,13 for the system to function and leakage to be detected earlier.

Both methods entail the respective low-pressure valves 11,13 being diagnosed alternately, i.e. before every second start. This makes it possible to achieve high quality diagnosis.

The invention is described above with reference to a number of different preferred embodiments. The invention is of course not limited thereto, since other variants of the invention are also possible within the scope of protection under the claims. Thus, for example, the gas pressure in the lines may be measured at different points and by different sensors 12,14 to increase the reliability of the measurements.

## Claims

1. A method for automatic diagnosis of gas leakage in a gas system for a gas-powered vehicle which gas system comprises at least one gas tank (1) which via a gas line system is in communication with an engine (9) via a high-pressure valve (2) situated downstream the gas tank (1), a pressure regulator (7) situated downstream of the high-pressure valve (2), a first low-pressure valve (11) situated downstream the high pressure valve (2), a further, second, low-pressure valve (13) situated downstream of the first low-pressure valve (11), and at least one pressure sensor (12,14)situated downstream the first low-pressure valve (11),
**characterised by**
- alternately closing one of the first and second low-pressure valves (11, 13), to alternately bring about a maximum pressure drop across the one of said first and second low-pressure valves (11, 13) being closed first, the engine (9) being stopped for lack of fuel or in some other way,
- later closing the not yet closed low-pressure valve (11, 13),
- measuring the gas pressure between the first low-pressure valve (11) and the second low pressure valve (13) when both low-pressure valves (11, 13) are closed,
- storing the measured pressure value in a memory,
- measuring the gas current pressure again before the next start of the engine (9),
- comparing said current pressure with the pressure value stored in the memory,
- evaluating whether the expected pressure difference is obtained, and
- determining whether leakage has occurred.

2. A method according to claim 1,
**characterised by**
- measuring the temperature of the gas,
- saving the temperature value in a memory,
- calculating the pressure value with respect to current gas temperature.

3. A system for automatic diagnosis of gas leakage in a gas system for a gas-powered vehicle, which gas system comprises at least one gas tank (1) which via a line system is in communication with an engine (9) via a high-pressure valve (2) situated downstream the gas tank (1), a pressure regulator (7) situated downstream of the high-pressure valve (2), a first low-pressure valve (11) situated downstream the high-pressure valve (2), a further, second, low-pressure valve (13) situated downstream of the first low-pressure valve (11), and at least one pressure sensor (12,14) situated downstream of the first low-pressure valve (11),
**characterised by**
- a control device (15) adapted to, when the engine is stopped for lack of fuel or in some other way, alternately first closing the first and second low-pressure valves (11,13) to alternately bring about a maximum pressure drop across the one of said first and second low-pressure valves (11, 13) being closed first,
- a control device (15) adapted to later closing the not yet closed low-pressure valve (11,13),
- a sensor (12,14) for measuring the gas pressure between the first low-pressure valve (11) and the second low pressure valve (13),
- a memory (16) for storing the measured pressure value,
- a sensor (12,14) for measuring the gas pressure before the next start of the engine (9),
- a control device (15) for comparing a current pressure with a pressure value stored in the memory (16),
- a control device (15) for evaluating whether an expected pressure difference is obtained, and
- a control device (15) for determining whether leakage has occurred.

4. A system according to claim 3,
**characterised by**
- a sensor (12,14) for measuring the temperature of the gas,
- a memory (16) for storing the temperature value,
- a control device (15) for calculating the pressure value with compensation for current gas temperature.

## Patentansprüche

1. Verfahren zur automatischen Diagnose einer Gasleckage in einer Gasanlage eines gasbetriebenen Fahrzeugs, wobei die Gasanlage mindestens einen Gastank (1) aufweist, der über ein Gasleitungssystem mit einem Verbrennungsmotor (9) über ein Hochdruckventil (2) kommuniziert, das stromabwärts des Gastanks (1) angeordnet ist, einen Druckregler (7), der stromabwärts des Hochdruckventils (2) angeordnet ist, ein erstes Niederdruckventil (11), das stromabwärts des Hochdruckventils (2) angeordnet ist, ein weiteres zweites Niederdruckventil (13), das stromabwärts des ersten Niederdruckventils (11) angeordnet ist, und mindestens einen Drucksensor (12, 14), der stromabwärts des ersten Niederdruckventils (11) angeordnet ist,
**gekennzeichnet durch**
- abwechselndes Schließen des ersten und des zweiten Niederdruckventils (11, 13), um abwechselnd einen maximalen Druckabfall über das eine des ersten und des zweiten Niederdruckventils (11, 13) herbeizuführen, das zuerst geschlossen wird, wobei der Verbrennungsmotor (9) wegen des Mangels an Kraftstoff oder auf eine andere Weise abgeschaltet ist,
- späteres Schließen des noch nicht geschlossenen Niederdruckventils (11, 13),
- Messen des Gasdrucks zwischen dem ersten Niederdruckventil (11) und dem zweiten Niederdruckventil (13), wenn beide Niederdruckventile (11, 13) geschlossen sind,
- Speichern des gemessenen Druckwertes in einem Speicher,
- erneutes Messen des aktuellen Gasdrucks vor dem nächsten Anlassen des Verbrennungsmotors (9),
- Vergleichen des aktuellen Drucks mit dem im Speicher gespeicherten Druckwert,
- Prüfen, ob die erwartete Druckdifferenz erzielt worden ist, und
- Bestimmen, ob eine Leckage aufgetreten ist.

2. Verfahren nach Anspruch 1,
**gekennzeichnet durch**
- Messen der Temperatur des Gases,
- Speichern des Temperaturwertes in einem Speicher,
- Berechnen des Druckwertes bezüglich der aktuellen Gastemperatur.

3. System zur automatischen Diagnose einer Gasleckage in einer Gasanlage eines gasbetriebenen Fahrzeugs, wobei die Gasanlage mindestens einen Gastank (1) aufweist, der über ein Gasleitungssystem mit einem Verbrennungsmotor (9) über ein Hochdruckventil (2) kommuniziert, das stromabwärts des Gastanks (1) angeordnet ist, einen Druckregler (7), der stromabwärts des Hochdruckventils (2) angeordnet ist, ein erstes Niederdruckventil (11), das stromabwärts des Hochdruckventils (2) angeordnet ist, ein weiteres zweites Niederdruckventil (13), das stromabwärts des ersten Niederdruckventils (11) angeordnet ist, und mindestens einen Drucksensor (12, 14), der stromabwärts des ersten Niederdruckventils (11) angeordnet ist,
**gekennzeichnet durch**
- eine Steuerungseinrichtung (15), die dazu eingerichtet ist, das erste und das zweite Niederdruckventil (11, 13), abwechselnd zu schließen, um abwechselnd einen maximalen Druckabfall über das eine des ersten und des zweiten Niederdruckventils (11, 13) herbeizuführen, das zuerst geschlossen wird, wenn der Verbrennungsmotor (9) wegen des Mangels an Kraftstoff oder auf eine andere Weise abgeschaltet ist,
- eine Steuerungseinrichtung (15), die dazu eingerichtet ist, das noch nicht geschlossene Niederdruckventil (11, 13) später zu schließen,
- einen Sensor (12, 14) zum Messen des Gasdrucks zwischen dem ersten Niederdruckventil (11) und dem zweiten Niederdruckventil (13),
- einen Speicher (16) zum Speichern des gemessenen Druckwertes,
- einen Sensor (12, 14) zum Messen des Gasdrucks vor dem nächsten Anlassen des Verbrennungsmotors (9),
- eine Steuerungseinrichtung (15) zum Vergleichen des aktuellen Drucks mit dem im Speicher (16) gespeicherten Druckwert,
- eine Steuerungseinrichtung (15) zum Prüfen, ob die erwartete Druckdifferenz erzielt worden ist, und
- eine Steuerungseinrichtung (15) zum Bestimmen, ob eine Leckage aufgetreten ist.

4. System nach Anspruch 3,
**gekennzeichnet durch**
- einen Sensor (12, 14) zum Messen der Temperatur des Gases,
- einen Speicher (16) zum Speichern des Temperaturwertes,
- eine Steuerungseinrichtung (15) zum Berechnen des Druckwertes mit einer Kompensation der aktuellen Gastemperatur.

## Revendications

1. Procédé pour diagnostic automatique de fuite de gaz dans un système à gaz pour un véhicule fonctionnant au gaz, ce système à gaz comprenant au moins un réservoir de gaz (1) qui, par l'intermédiaire d'un système de ligne de gaz, est en communication avec un moteur (9) par l'intermédiaire d'une vanne haute pression (2) située en aval du réservoir de gaz (1), un régulateur de pression (7) situé en aval de la vanne haute pression (2), une première vanne basse pression (11) située en aval de la vanne haute pression (2), une deuxième vanne basse pression additionnelle (13) située en aval de la première vanne basse pression (11), et au moins un capteur de pression (12, 14) situé en aval de la première vanne basse pression (11),
**caractérisé par** :
- la fermeture alternée de l'une des première et deuxième vannes basse pression (11, 13), de façon à produire en alternance une chute de pression maximale à travers celle desdites première et deuxième vannes basse pression (11, 13) qui est fermée en premier, le moteur (9) étant arrêté du fait d'un manque de carburant ou d'une quelconque autre façon,
- puis, ensuite, la fermeture de la vanne basse pression (11, 13) non encore fermée,
- la mesure de la pression de gaz entre la première vanne basse pression (11) et la deuxième vanne basse pression (13) lorsque les deux vannes basse pression (11, 13) sont fermées,
- la mémorisation de la valeur de pression mesurée dans une mémoire,
- à nouveau, la mesure de la pression de gaz actuelle avant le démarrage suivant du moteur (9),
- la comparaison de ladite pression actuelle à la valeur de pression mémorisée dans la mémoire,
- l'évaluation du fait que la différence de pression prévue est ou non obtenue, et
- la détermination du fait qu'une fuite s'est ou non produite.

2. Procédé selon la revendication 1,
**caractérisé par** :
- la mesure de la température du gaz,
- la sauvegarde de la valeur de température dans une mémoire,
- le calcul de la valeur de pression par rapport à la température de gaz actuelle.

3. Système pour diagnostic automatique de fuite de gaz dans un système à gaz pour un véhicule fonctionnant au gaz, ce système à gaz comprenant au moins un réservoir de gaz (1) qui, par l'intermédiaire d'un système de ligne, est en communication avec un moteur (9) par l'intermédiaire d'une vanne haute pression (2) située en aval du réservoir de gaz (1), un régulateur de pression (7) situé en aval de la vanne haute pression (2), une première vanne basse pression (11) située en aval de la vanne haute pression (2), une deuxième vanne basse pression additionnelle (13) située en aval de la première vanne basse pression (11), et au moins un capteur de pression (12, 14) situé en aval de la première vanne basse pression (11),
**caractérisé par** :
- un dispositif de commande (15) adapté, lorsque le moteur est arrêté du fait d'un manque de carburant ou d'une quelconque autre façon, pour fermer tout d'abord en alternance les première et deuxième vannes basse pression (12, 13) de façon à produire en alternance une chute de pression maximale à travers celle desdites première et deuxième vannes basse pression (11, 13) qui est fermée en premier,
- un dispositif de commande (15) adapté de façon à fermer ensuite la vanne basse pression (11, 13) non encore fermée,
- un capteur (12, 14) pour mesurer la pression de gaz entre la première vanne basse pression (11) et la deuxième vanne basse pression (13),
- une mémoire (16) pour mémoriser la valeur de pression mesurée,
- un capteur (12, 14) pour mesurer la pression de gaz avant le démarrage suivant du moteur (9),
- un dispositif de commande (15) pour comparer une pression actuelle à une valeur de pression mémorisée dans la mémoire (16),
- un dispositif de commande (15) pour évaluer si une différence de pression prévue est ou non obtenue, et
- un dispositif de commande (15) pour déterminer si une fuite s'est ou non produite.

4. Système selon la revendication 3,
**caractérisé par** :
- un capteur (12, 14) pour mesurer la température du gaz,
- une mémoire (16) pour mémoriser la valeur de température,
- un dispositif de commande (15) pour calculer la valeur de pression avec une compensation en fonction de la température de gaz actuelle.
